# EUROPÄISCHE PATENTANMELDUNG

(11) **EP 2 642 061 A2**
(43) Veröffentlichungstag der Anmeldung: **25.09.2013**
(21) Anmeldenummer: 13000980.6
(22) Anmeldetag: 26.02.2013
(51) Int. Cl.: E06B 3/56, B32B 17/10, E06B 3/66

(54) **Isolierglasscheibe und Fenstermodul**

(30) Priorität: 19.03.2012 DE 202012002722 U
(71) Anmelder: Flachglas Wernberg GmbH, 92533 Wernberg-Köblitz (DE)
(72) Erfinder: Anzer, Josef, 92507 Nabburg (DE); Rädel, Martin, 92533 Wernberg-Köblitz (DE); Weiß, Josef, 92533 Wernberg-Köblitz (DE)
(74) Vertreter: FDST Patentanwälte

(57) **Zusammenfassung**

Es werden eine Isolierglasscheibe (2) mit wenigstens einer ersten Glasscheibe (4) und einer zweiten Glasscheibe (5), die durch einen Isolierraum (6) voneinander getrennt sind, sowie ein Fenstermodul (1) mit einer solchen Isolierglasscheibe (2) angegeben. Die erste Glasscheibe (4) ist als eine Verbundglasscheibe ausgebildet, die eine dem Isolierraum (6) abgewandte Außenscheibe (9), eine dem Isolierraum (6) zugewandte Innenscheibe (10) und eine zwischen der Außenscheibe (9) und der Innenscheibe (10) eingelegte Verbundglasfolie (11) umfasst. Dabei ist vorgesehen, dass die Innenscheibe (10) der Verbundglasscheibe und die Verbundglasfolie (11) an einer Stirnseite (16) gegenüber der Außenscheibe (9) verkürzt sind, und dass diese Stirnseite (16) mit einem Klebstoffmaterial (18, 19) eben verfüllt ist. Die Empfindlichkeit der Isolierglasscheibe (2) gegenüber Feuchtigkeit ist verringert.

## Beschreibung

Die Erfindung betrifft eine Isolierglasscheibe mit wenigstens einer ersten Glasscheibe und einer zweiten Glasscheibe, die durch einen Isolierraum voneinander getrennt sind, wobei die erste Glasscheibe als eine Verbundglasscheibe ausgebildet ist, die eine dem Isolierraum abgewandte Außenscheibe, eine dem Isolierraum zugewandte Innenscheibe und eine zwischen der Außenscheibe und der Innenscheibe eingelegte Verbundglasfolie umfasst. Die Erfindung betrifft weiter ein Fenstermodul mit einer in einen Rahmen eingeklebten derartigen Isolierglasscheibe.

Eine Isolierglasscheibe der oben genannten Art mit wenigstens einer Glasscheibe, die als eine Verbundglasscheibe ausgebildet ist, wird im Schiff-, Flugzeug- und Fahrzeugbau verwendet. Im Fahrzeugbau wird eine solche Isolierglasscheibe insbesondere bei Schienenfahrzeugen eingesetzt. Die Verbundglasscheibe, die auch als Sicherheitsglas bezeichnet wird, verringert im Bruchfall das Verletzungsrisiko durch Glasscherben. Der Fahrzeuginnenraum ist thermisch gut isoliert.

Bei einer bündig zur Außenhaut eines Fahrzeugs eingesetzten Verbundglasscheibe ist der Abstand der Verbundglasfolie nach außen durch die Glasdicke der Außenscheibe gegeben. Derartige Außenscheiben sind meist dünn und weisen lediglich eine Dicke von wenigen Millimetern auf. Die zum Einsetzen der Isolierglasscheibe verwendeten Kleb- oder Dichtstoffe auf Basis von Polyurethan oder Polysulfit sind für Wasserdampf bekanntermaßen nicht absolut diffusionsdicht. Wasser oder Feuchtigkeit, aber auch Reinigungsmittel etc. können insofern an der Stirnseite der Isolierglasscheibe durch das Klebstoffbett bis zur eingelegten Verbundglasfolie gelangen. Die eingesetzten Verbundglasfolien, üblicherweise aus PVC, sind nachteiligerweise jedoch feuchtigkeitsempfindlich und zeigen bei Feuchtigkeitseintritt eine milchig-graue Verfärbung. Auch kann sich die Verbundglasfolie feuchtigkeitsbedingt von der Glasscheibe ablösen. Derartige durch Feuchtigkeit bedingte Alterungserscheinungen sind von außen sichtbar, sofern auf der Verbundglasscheibe im Randbereich kein Siebdruck aufgebracht ist.

Aufgabe der Erfindung ist es, eine Isolierglasscheibe der eingangs genannten Art anzugeben, deren Empfindlichkeit gegenüber Feuchtigkeit verringert ist. Eine weitere Aufgabe der Erfindung ist es, ein Fenstermodul anzugeben, das gegenüber Feuchtigkeit eine möglichst große Toleranz aufweist.

Die erstgenannte Aufgabe wird für eine Isolierglasscheibe der eingangs genannten Art erfindungsgemäß dadurch gelöst, dass die Innenscheibe der Verbundglasscheibe und die Verbundglasfolie an einer Stirnseite der Isolierglasscheibe gegenüber der Außenscheibe verkürzt sind, und dass diese Stirnseite mit einem Klebstoffmaterial eben verfüllt ist.

Die Erfindung geht dabei von der Überlegung aus, dass durch das Zurücksetzen der Innenscheibe und der Verbundglasfolie die Kriech- oder Diffusionsstrecke für Feuchtigkeit von außen bis zur Verbundglasfolie verlängert wird. Zur Dicke der Außenscheibe addiert sich die Strecke hinzu, um die die Verbundglasfolie gegenüber der Außenscheibe zurückversetzt bzw. verkürzt ist. Durch diese Streckenverlängerung wird die Diffusionsbarriere für Feuchtigkeit vergrößert, so dass die Empfindlichkeit der Verbundglasscheibe und somit der Isolierglasscheibe gegenüber Feuchtigkeit erhöht ist. Die in die Verbundglasscheibe eingelegte Verbundglasfolie ist besser vor Feuchtigkeit geschützt.

Durch die ebene Verfüllung der Stirnseite, an der die Innenscheibe der Verbundglasscheibe verkürzt ist, bedarf es zur Montage der Isolierglasscheibe gegenüber bekannten Verfahren keiner Änderung. Die Isolierglasscheibe wird in ein Klebstoffbett eingesetzt, welches auf einem Profilrahmen aufgebracht ist. Nach Aushärtung ist die Isolierglasscheibe dicht mit dem Profilrahmen verbunden.

Die Erfindung erfordert die Verkürzung der Innenscheibe der als Verbundglasscheibe ausgeführten ersten Glasscheibe nicht notwendigerweise an jeder Stirnseite. Bevorzugt sind jedoch die Innenscheibe und die Verbundglasfolie insgesamt gegenüber der Außenscheibe verkleinert, so dass sich für die Isolierglasscheibe umlaufend eine vergrößerte Diffusionsbarriere für Feuchtigkeit ergibt. Mit anderen Worten sind in diesem Fall die Innenscheibe und die Isolierglasfolie am Rand der Isolierglasscheibe umlaufend gegenüber der Außenscheibe verkürzt.

Zweckmäßigerweise sind die Innenscheibe und die Verbundglasfolie gegenüber der Außenscheibe zwischen 2 mm und 10 mm, insbesondere um die Dicke der Außenscheibe, verkürzt.

Bevorzugt ist die Stirnseite, an der die Innenscheibe verkürzt ist, bündig mit der Außenscheibe verfüllt. Hierdurch ist die sich durch die Zurücksetzung der Innenscheibe ergebende Stufe bereits vor der Montage aufgefüllt. Bei der Montage ist insofern kein zusätzlicher Klebstoffaufwand erforderlich.

Das zur Auffüllung herangezogene Klebstoffmaterial wird bevorzugt zugleich als Dichtmaterial eingesetzt. Die Auffüllung der Stufe kann aber auch mit unterschiedlichen Klebstoffmaterialien erfolgen, um einerseits die Abdichtung des Isolierraums zu gewährleisten und um andererseits bei der Montage die Verklebung mit dem Klebstoffbett sicherzustellen.

In einer weiter vorteilhaften Ausgestaltung schließen die zweite Glasscheibe und die Außenscheibe der Verbundglasscheibe an der Stirnseite bündig ab. Auf diese Weise entsteht zwischen der ersten und der zweiten Glasscheibe ein Formrand, der herstellerseitig sehr einfach mit Klebstoff- und/oder Dichtmaterial befüllt werden kann. Ein gegebenenfalls aufwändiges Formwerkzeug kann entfallen. Die derart gefertigte Isolierglasscheibe zeigt hinsichtlich ihrer äußeren Abmessungen und ihren Montageanforderungen keine Veränderungen gegenüber einer vergleichbaren Isolierglasscheibe des Standes der Technik.

Bevorzugt ist auch die zweite Glasscheibe als eine Verbundglasscheibe mit einer dem Isolierraum abgewandten Außenscheibe, einer dem Isolierraum zugewandten Innenscheibe und einer dazwischen eingelegten Verbundglasfolie ausgebildet, wobei zumindest die beiden Außenscheiben an der Stirnseite bündig abschließen. Beide Glasscheiben sind in diesem Fall als Verbundglasscheiben ausgeführt.

In der vorgenannten Ausführungsform sind weiter bevorzugt beide Innenscheiben mit den jeweiligen Verbundglasfolien an der Stirnseite gegenüber den Außenscheiben verkürzt. Mit anderen Worten ist für beide Verbundglasscheiben jeweils die Kriechstrecke bzw. Diffusionsstrecke für Feuchtigkeit zur Verbundglasfolie verlängert. Da die zweite Glasscheibe häufig zum Innenraum eines Fahrzeugs gegen einen Steg des Profilrahmens verklebt ist, ist dort die Diffusionsstrecke für Feuchtigkeit durch das Klebstoffbett hindurch an sich bereits erhöht. Die Verkürzung der Innenscheibe und der Verbundglasfolie ist somit an der zweiten, dem Innenraum eines Fahrzeugs zugewandten Glasscheibe nicht zwingend erforderlich.

Zweckmäßigerweise ist zur Bildung des Isolierraums zwischen der ersten Glasscheibe und der zweiten Glasscheibe ein Abstandhalter eingesetzt. Durch diesen Abstandhalter ist die Dicke des Isolierraums in der Isolierglasscheibe definiert.

Weiter bevorzugt ist das Klebstoffmaterial stirnseitig bis zum Abstandhalter verfüllt. Mit anderen Worten wird nach dem Zusammensetzen der beiden Glasscheiben der Rand mit Klebstoffmaterial bis zum Abstandhalter aufgefüllt. Durch das Klebstoffmaterial ist der Isolierraum nach außen abgedichtet. Das Klebstoffmaterial ist zugleich ein Dichtmaterial. Der Isolierraum ist insbesondere von Feuchtigkeit befreit und gegebenenfalls mit einem Isoliergas befüllt.

Zweckmäßigerweise ist die Außenscheibe der ersten Glasscheibe in einem Randbereich mit einem Siebdruck versehen. Hierdurch wird eine angenehme Optik im Klebebereich der Isolierglasscheibe geschaffen. Zugleich bietet ein derartiger Siebdruck einen UV-Schutz für die Verklebung. Etwaige Folienschäden im Randbereich, sofern entsprechend der vorliegenden Erfindung noch vorhanden, werden vom Siebdruck überdeckt. Der Siebdruck kann wahlweise auf der der Isolierglasfolie zugewandten Innenseite oder auf der Außenseite der Außenscheibe aufgebracht sein.

Die zweitgenannte Aufgabe wird erfindungsgemäß durch ein Fenstermodul mit einem Rahmen und mit einer Isolierglasscheibe der vorbeschriebenen Art gelöst, wobei die Isolierglasscheibe mittels eines Klebstoffbetts in den Rahmen eingeklebt ist.

Der Rahmen kann sowohl ein Profilrahmen als auch Teil einer Fahrzeugwand sein.

Die für die vorteilhaften Weiterbildungen der Isolierglasscheibe jeweils genannten Vorteile können hierbei sinngemäß auf das Fenstermodul übertragen werden.

In einer Weiterbildung des Fenstermoduls ist die Isolierglasscheibe mit einer Außenscheibe der ersten Glasscheibe bündig in den Rahmen oder in die Fahrzeugwand eingeklebt. Im eingebauten Zustand schließt somit die Außenscheibe der ersten Glasscheibe mit einer Außenhaut eines Fahrzeugs bündig ab. Zum Innenraum hin ist weiter bevorzugt die zweite Glasscheibe bzw. deren Außenscheibe randseitig gegen einen Steg des Profilrahmens geklebt.

Ausführungsbeispiele der Erfindung werden anhand einer Zeichnung näher erläutert. Dabei zeigen:
- FIG. 1: in einem Querschnitt die in einem Rahmen eingesetzte Stirnseite einer ersten Isolierglasscheibe,
- FIG. 2: in einem Querschnitt die in einem Rahmen eingesetzte Stirnseite einer zweiten Isolierglasscheibe und
- FIG. 3: in einem Querschnitt die in einem Rahmen eingesetzte Stirnseite einer dritten Isolierglasscheibe.

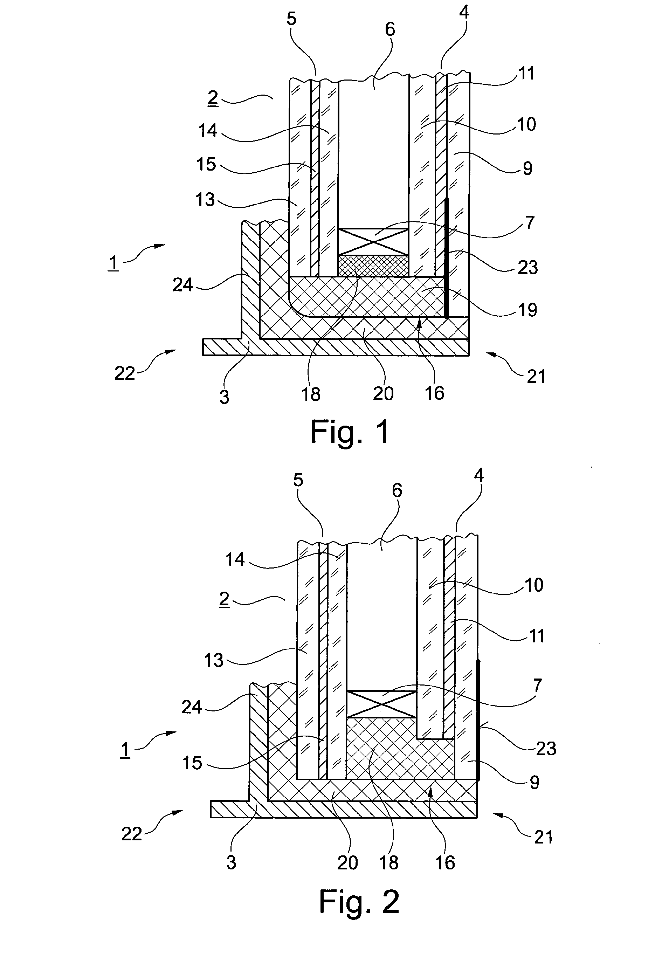

In FIG. 1 ist in einem Querschnitt eine Teilansicht eines Fenstermoduls 1 dargestellt. Von dem Fenstermodul 1 ist die Stirnseite einer Isolierglasscheibe 2 erkennbar, die in einen Rahmen oder in eine Fahrzeugwand 3 eingeklebt ist. Die Isolierglasscheibe 2 umfasst eine erste Glasscheibe 4 und eine zweite Glasscheibe 5, die voneinander durch einen Isolierraum 6 getrennt sind. Zur Ausbildung des Isolierraums 6 ist zwischen der ersten Glasscheibe 4 und der zweiten Glasscheibe 5 ein Abstandhalter 7 eingesetzt.

Die erste Glasscheibe 4 ist als eine Verbundglasscheibe ausgebildet und weist eine Außenscheibe 9, eine Innenscheibe 10 und eine zwischen der Außenscheibe 9 und der Innenscheibe 10 eingelegte Isolierglasfolie 11 auf. Auch die zweite Isolierglasscheibe 5 ist als eine Verbundglasscheibe ausgebildet. Diese umfasst eine Außenscheibe 13, eine Innenscheibe 14 und eine zwischen der Außenscheibe 13 und der Innenscheibe 14 eingelegte Isolierglasfolie 15.

Die Innenscheibe 10 und die Isolierglasfolie 11 der ersten Glasscheibe 4 sind gegenüber der Außenscheibe 9 an der Stirnseite 16 zurückgesetzt. Die zweite Glasscheibe 5 schließt bündig mit der Innenscheibe 10 ab. Der Raum zwischen der zweiten Glasscheibe 5 und der Innenscheibe 10 der ersten Glasscheibe 4 ist bis zum Abstandhalter 7 nach außen zunächst eben mit einem Klebstoffmaterial 18 verfüllt, welches als Dichtmaterial zugleich den Isolierraum 6 abdichtet. Zusätzlich ist die Stirnseite 16 der Isolierglasscheibe 2 mit einer ebenen Klebstoffanformung 19 versehen, die die Stufe zwischen der zweiten Glasscheibe 5 und der Innenscheibe gegenüber der Außenscheibe 9 der ersten Glasscheibe 4 ausgleicht. Klebstoff- bzw. Dichtmaterial 18 und Klebstoffanformung 19 sind werksseitig vor der Endmontage auf die Stirnseite 16 der Isolierglasscheibe 2 aufgebracht.

Die Isolierglasscheibe 2 wird zur Montage mit der Klebstoffanformung 9 in ein Klebbstoffbett 20 eingesetzt, welches auf den Rahmen 3 aufgebracht ist. Nach Aushärtung des Klebstoffbetts 20 ist die Isolierglasscheibe 2 fest mit dem Rahmen 3 verklebt.

An der Innenseite der Außenscheibe 9 der ersten Glasscheibe 4 ist ein Siebdruck 23 aufgebracht, der einen direkten Blick auf den Randbereich der Verbundglasfolie 11 verhindert.

Die erste Glasscheibe 4 ist auf einer Außenseite 21 bündig mit dem Rahmen 3 verklebt. Für von außen eindringende Feuchtigkeit ist die Diffusionsstrecke zur Verbundglasfolie 11 durch deren stufenartigen Versatz verlängert. Feuchtigkeit kann an der Stirnseite 16 nur durch Diffusion durch das Klebstoffbett 20 und durch die Klebstoffanformung 19 zur zurückversetzten Verbundglasfolie 11 gelangen. Die Alterungsbeständigkeit der Verbundglasfolie 11 ist aufgrund der verlängerten Diffusionsstrecke erhöht.

In FIG. 2 ist eine gegenüber FIG. 1 modifizierte Isolierglasscheibe 2 in den Rahmen 3 eingeklebt. Bei dieser Isolierglasscheibe schließt die zweite Glasscheibe 5, die wiederum als eine Verbundglasscheibe mit einer Außenscheibe 13 und einer Innenscheibe 14 ausgebildet ist, an der Stirnseite 16 insgesamt bündig mit der Außenscheibe 9 der ersten Glasscheibe 4 ab.

Der sich an der Stirnseite 16 der Isolierglasscheibe 2 ergebende Raum zwischen den beiden Glasscheiben 4, 5 ist bündig und eben mit Klebstoffmaterial 18 befüllt, welches bis zum Abstandhalter 7 reicht, und zugleich als Dichtmaterial für den Isolierraum wirkt.

Gegenüber der Ausführungsvariante entsprechend FIG. 1 weist die Modifikation entsprechend FIG. 2 einen deutlichen Fertigungsvorteil auf. Zur Verfüllung der Stirnseite 16 der Isolierglasscheibe 2 ist kein weiteres Formwerkzeug erforderlich. Die erste Glasscheibe 4 und die zweite Glasscheibe 5 bilden gewissermaßen einen Formrand. Die durch die Glasscheiben 4, 5 gebildete Form an der Stirnseite 16 kann in einfacher Art und Weise mit dem Klebstoffmaterial 18 verfüllt werden.

Feuchtigkeit kann von der Außenseite 21 zur zurückgesetzten Verbundglasfolie 11 nur über Diffusion durch das Klebstoffbett 20 und durch das Klebstoffmaterial 18 gelangen.

Die Innenscheibe 14 und die Verbundglasfolie 15 der zweiten Glasscheibe 5 sind an der Stirnseite 16 nicht zurückgesetzt. Dies ist vorliegend nicht erforderlich. Die zweite Glasscheibe 5 ist im montierten Zustand zu einer Innenseite 22 (beispielsweise einem Fahrgastraum) gegen einen Steg 24 des Rahmens 3 geklebt. Die Diffusionsstrecke für Feuchtigkeit bis zur Isolierglasfolie 15 ist hierdurch an sich bereits verlängert. Dies ist auch bei der Ausführungsvariante gemäß FIG. 1 der Fall.

Bei der Ausführungsvariante entsprechend FIG. 2 ist ein Siebdruck 23 auf der Außenseite der Außenscheibe 9 der ersten Glasscheibe 4 aufgebracht, der einen direkten Blick auf den Randbereich der Verbundglasfolie 11 verhindert und einen UV-Schutz für die Verklebung bietet.

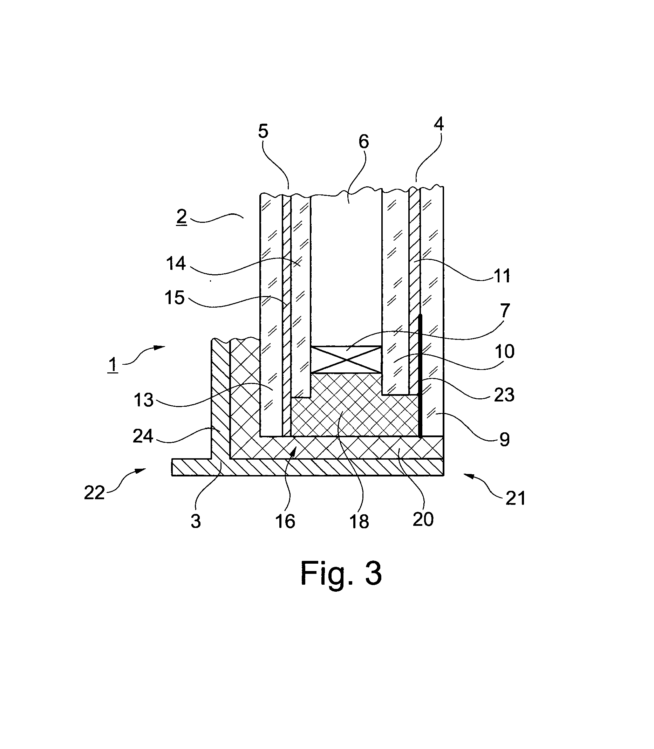

In FIG. 3 ist die Stirnseite einer dritten Ausführungsvariante einer Isolierglasscheibe 1 dargestellt, die wiederum in den Profilrahmen 3 eingeklebt ist. Bei dieser Modifikation sind die Innenscheiben 10, 14 und die Verbundglasfolien 11, 15 der als Verbundglasscheiben ausgeführten Glasscheiben 4, 5 jeweils gegen die Außenscheiben 9, 13 zurückgesetzt. Somit sind für beide Verbundglasscheiben die Diffusionsstrecken zur jeweiligen Verbundglasfolie 11, 15 vergrößert.

An der Stirnseite 16 ist der sich insgesamt zwischen den beiden Außenscheiben 9, 13 ergebende Randbereich bündig mit einem Klebstoffmaterial 18 verfüllt.

Allen drei Modifikationen gemäß FIG.1 bis FIG. 3 ist gemeinsam, dass die erste Glasscheibe 4 mit ihrer Außenscheibe 9 an der Außenseite 21 bündig in den Rahmen 3 oder in eine Fahrzeugwand eingeklebt ist. Die Außenscheibe 9 ist in eingebautem Zustand bündig mit der Fahrzeugaußenhaut eingesetzt.

### Bezugszeichenliste

| | |
|---|---|
| 1 | Fenstermodul |
| 2 | Isolierglasscheibe |
| 3 | Rahmen / Fahrzeugwand |
| 4 | erste Glasscheibe |
| 5 | zweite Glasscheibe |
| 6 | Isolierraum |
| 7 | Abstandhalter |
| 9 | Außenscheibe |
| 10 | Innenscheibe |
| 11 | Isolierglasfolie |
| 13 | Außenscheibe |
| 14 | Innenscheibe |
| 15 | Isolierglasfolie |
| 16 | Stirnseite |
| 18 | Dichtmaterial |
| 19 | Klebstoffanformung |
| 20 | Klebstoffbett |
| 21 | Außenseite |
| 22 | Innenseite |
| 23 | Siebdruck |
| 24 | Steg |

## Patentansprüche

1. Isolierglasscheibe (2) mit wenigstens einer ersten Glasscheibe (4) und einer zweiten Glasscheibe (5), die durch einen Isolierraum (6) voneinander getrennt sind, wobei die erste Glasscheibe (4) als eine Verbundglasscheibe ausgebildet ist, die eine dem Isolierraum (6) abgewandte Außenscheibe (9), eine dem Isolierraum (6) zugewandte Innenscheibe (10) und eine zwischen der Außenscheibe (9) und der Innenscheibe (10) eingelegte Verbundglasfolie (11) umfasst,
**dadurch gekennzeichnet,**
**dass** die Innenscheibe (10) der Verbundglasscheibe und die Verbundglasfolie (11) an einer Stirnseite (16) gegenüber der Außenscheibe (9) verkürzt sind, und dass diese Stirnseite (16) mit einem Klebstoffmaterial (18, 19) eben verfüllt ist.

2. Isolierglasscheibe (2) nach Anspruch 1,
**dadurch gekennzeichnet,**
**dass** die Stirnseite (16) bündig mit der Außenscheibe (9) verfüllt ist.

3. Isolierglasscheibe (2) nach Anspruch 1 oder 2,
**dadurch gekennzeichnet,**
**dass** die zweite Glasscheibe (5) und die Außenscheibe (9) der Verbundglasscheibe an der Stirnseite (16) bündig abschließen.

4. Isolierglasscheibe (2) nach Anspruch 1 oder 2,
**dadurch gekennzeichnet,**
**dass** auch die zweite Glasscheibe (5) als eine Verbundglasscheibe mit einer dem Isolierraum (6) abgewandten Außenscheibe (13), einer dem Isolierraum (6) zugewandten Innenscheibe (14) und einer dazwischen eingelegten Verbundglasfolie (15) ausgebildet ist, wobei zumindest die beiden Außenscheiben (9, 13) an der Stirnseite (16) bündig abschließen.

5. Isolierglasscheibe (2) nach Anspruch 4,
**dadurch gekennzeichnet,**
**dass** beide Innenscheiben (10, 14) mit den jeweiligen Verbundglasfolien (11, 15) an der Stirnseite (16) gegenüber den Außenscheiben (9, 13) verkürzt sind.

6. Isolierglasscheibe (2) nach einem der vorhergehenden Ansprüche,
**dadurch gekennzeichnet,**
**dass** die oder jede Innenscheibe (10, 14) mit der jeweiligen Verbundglasfolie (11, 15) umlaufend verkürzt ist.

7. Isolierglasscheibe (2) nach einem der vorhergehenden Ansprüche,
**dadurch gekennzeichnet,**
**dass** zur Bildung des Isolierraums (6) zwischen der ersten Glasscheibe (4) und der zweiten Glasscheibe (5) ein Abstandhalter (7) eingesetzt ist.

8. Isolierglasscheibe (2) nach Anspruch 7,
**dadurch gekennzeichnet,**
**dass** das Klebstoffmaterial (18, 19) stirnseitig bis zum Abstandhalter (7) verfüllt ist.

9. Isolierglasscheibe (2) nach einem der vorhergehenden Ansprüche,
**dadurch gekennzeichnet,**
**dass** die Außenscheibe (9) der ersten Glasscheibe (4) in einem Randbereich mit einem Siebdruck (23) versehen ist.

10. Fenstermodul (1) mit einem Rahmen (3) und mit einer Isolierglasscheibe (2) nach einem der vorhergehenden Ansprüche, wobei die Isolierglasscheibe (2) mittels eines Klebstoffbetts (20) in den Rahmen (3) eingeklebt ist.

11. Fenstermodul (1) nach Anspruch 10,
wobei die Isolierglasscheibe (2) mit der Außenscheibe (9) der ersten Glasscheibe (4) bündig in den Rahmen (3) eingeklebt ist.
